# EUROPEAN PATENT SPECIFICATION

(11) **EP 1 787 855 B1**
(45) Date of publication and mention of the grant of the patent: **14.03.2012**
(21) Application number: 05111034.4
(22) Date of filing: 21.11.2005
(51) Int. Cl.: B60N 2/28, B60N 2/20, B60N 2/30

(54) **Vehicle child seat arrangement**
Fahrzeug Kindersitzanordnung
Agencement de siège enfant de véhicule

(43) Date of publication of application: 23.05.2007
(73) Proprietor: Volvo Car Corporation, 405 31 Göteborg (SE)
(72) Inventor: Kolita, Mendis, Fox Piont, WI 53217 (US); Downs, John W, SIMI VALLEY, CA 93065 (US); Sommerfeld, Bengt, Thousand Oaks, CA 91362 (US); Taylor, Blair, Thousand Oaks, California 91360 (US)
(74) Representative: Romare, Laila Anette

(56) References cited:
- EP-A- 0 770 516
- DE-A1- 19 732 385
- DE-C1- 19 646 621
- FR-A- 2 741 847
- US-A1- 2004 124 678
- PATENT ABSTRACTS OF JAPAN vol. 2003, no. 12, 5 December 2003 (2003-12-05) -& JP 2004 106785 A (MAZDA MOTOR CORP), 8 April 2004 (2004-04-08)

## Description

### TECHNICAL FIELD

The present invention relates to a vehicle seat arrangement comprising a rear seat having a backrest section and a seat section, wherein at least a part of the backrest section can be folded to accommodate a rearward facing child seat.

### BACKGROUND ART

It is well established that a rearward facing seating position is the safest way for infants and toddlers to travel in a vehicle. The inertial forces acting on a child during a frontal collision are distributed over a larger area against the seatback and instead of being concentrated to the seatbelts strapping the child to the seat. More importantly, the child's neck is not subjected to dangerous bending and tensile loads. In some countries, such as the USA, laws dictate that an infant must be placed in a rear facing child seat until the child is one year old. However, based on statistical data and biomechanical research, child safety experts recommend that children should travel facing rearward until the age of four years. Recent studies show that even older children, up to and beyond the age of five, can benefit from travelling in a rear facing seat during frontal collision. A rear facing child seat is typically positioned onto the rear seat of a vehicle. If the vehicle is not provided with a front passenger airbag, or if the airbag is deactivated, the child seat can also be positioned on the front passenger seat. However, the front seat may be less safe than the rear seat due to greater exposure to injury from windshield glass debris and a possible intrusion of the dashboard in severe frontal collisions.

JP 2004-106 785 discloses a vehicle child seat arrangement according to the preamble of claim 1, wherein a forward/rearward facing child seat is arranged on a base member on the folded backrest of a rear seat. A problem with this solution is that, in its rearward facing position, the seat is only supported by the base member and that the backrest of the rear seat must absorb the entire force of the child and the child seat during a collision event.

EP 0 770 516 discloses a vehicle seat with a main backrest and a retractable sub vehicle seat. The retractable sub vehicle seat has a recess formed on the rear side of the main backrest and a sub backrest rotatably attached to the main backrest. A problem with this solution is that the entire weight of the child must be absorbed by the hinge section for the sub backrest. An additional problem is the fact that when placing the child seat in close proximity to the dashboard, it is an absolute requirement that the passenger airbag is disabled.

US 2004/124 678 and DE 197 32 385 both describe the state of the art in the field, where the problem is how to secure a child seat in the rear seat of a vehicle using seat belts or similar arrangements. Due to the properties of the relatively soft seat cushions provided in a modern vehicle, the child seat is likely to move forwards and downwards during a collision event. As shown in DE 197 32 385, this is counteracted by providing an additional attachment strap fixing the upper part of the child seat to the back of a front passenger seat. A problem with these solutions is that users often find the attachment of child seats using straps or belts relatively complicated. Also the the type of belts provided and the position of attachment point may vary from vehicle to vehicle.

A problem relating to rear facing child seats is that they can comfortably accommodate tall infants or young toddlers until their feet touch the rear seatback, after which they have to bend their knees. It is not uncommon that a toddler may have to bend her legs to fit in a rear-facing seat when she is about one year old. This may cause some discomfort but is not unsafe unless her knees should be drawn close to her face during a collision. An existing rear-facing seat supplied by Volvo ® is positioned further away from the rear seat back to increase leg room and to accommodate older toddlers in a rear facing seating position. However, the increased space may not be sufficient to accommodate from the age of five and up.

A further problem relating to child seats for older children is that they tend to take up a relatively large space when mounted in the rear seat.

This invention aims to solve these problems by providing a child seating system that can accommodate children from infancy to the age of at least five in a rearward facing position, as well as providing means for storing the seat when not in use.

### DISCLOSURE OF INVENTION

The invention relates to a rear facing child seat, according to claim 1 and its dependent claims.

According to a preferred embodiment, the invention relates to a vehicle seat arrangement comprising a rear seat having a backrest section and a seat section, wherein at least a part of the backrest section can be folded forwards from an upright position to a substantially flat position. The folded backrest has a rear surface having a substantially horizontal surface that may form a first support surface for a seat section of a rearward facing child seat. A rear section of a vehicle seat located in front of the folded section may form a second support surface for a backrest section of the rearward facing child seat. When a lower surface of the seat section of the child seat located on the first support surface, flush with the rear surface of the backrest section, an upper or headrest section may contact the second support surface of the forwardly located seat. The second support surface may be located on an upper part of the backrest or on a headrest of the forwardly located seat. The rear surface of the folded backrest may be provided with locking means arranged to cooperate with corresponding locking means in the lower surface of the seat section of the child seat in order to locate and hold the child seat in position. The backrest of the child seat may be provided with additional locking or attachment means for attaching it to, for instance, the headrest of the forwardly located seat

The rear surface supporting the child seat may be substantially horizontal, which is often the case when the seat section has been folded forwards around a front pivot point into a foot well in front of the rear seat and the backrest section has been folded forwards into the space vacated by the seat section. If the size of the child seat intended for accommodating a child over five years of age is used, then both the backrest section and the seat section are arranged to be folded. This brings the first support surface down to a level substantially flush with the level of a floor of a luggage compartment located to the rear of the backrest section.

Alternatively, only the backrest section is folded forwards, in which case the rear surface may either be substantially horizontal or be angled forwards and upwards, relative to the main direction of travel of the vehicle. This angle is dependent on the design of the rear seat and may vary between 0° and 10°. If the size of the child seat intended for accommodating a child up to five years of age is used, then it may be sufficient to fold the backrest section. This may be dependent on the position at which the upper or headrest section contacts the second support surface of the forwardly located seat. If an upper surface of the headrest on the child seat is higher than an upper surface of the headrest on the forwardly located seat, then the backrest section and the seat section can be folded, as described above.

The child seat may be attached to the first support surface by means of any suitable locking means. An example of one such locking means is a standard ISOFIX © attachment means, which is now provided as standard in many vehicles.

According to one space saving seat folding arrangement the child seat may be foldable into a collapsed state for storage when not in use. To achieve this, the child seat may comprise a telescoping backrest and a seat section arranged to be folded together for storage. For instance, the backrest may be divided into an upper and a lower part having substantially equal lengths, where the upper part may be telescopically displaced into the lower part. Alternatively the upper and lower parts are connected by a pivot joint, allowing the upper part to be folded down against the lower part. A releasable locking or latching means may be used to lock the upper and lower parts in their extended and collapsed positions. The child seat may be collapsed further by folding the collapsed backrest over the seat section, by means of a pivot joint located at or near the position where the backrest is joined to the seat section.

In addition to the collapsible function described above, the child seat may be provided with means for adjusting the position of a headrest and a separate or combined guide for a seat belt, the width of the seat and other function commonly provided for child seats.

According to a further feature, the child seat may be arranged to remain attached to the rear surface of the backrest section when the backrest in an upright position. In this case the child seat is collapsed in place, whereby the backrest section of the rear seat is raised to its upright position. The child seat is the stored in a luggage compartment behind the row of rear seats.

According to an alternative space saving seat folding arrangement, the collapsed child seat may be stored in a compartment located under a foldable bulkhead section in a floor section in a luggage compartment located to the rear of the row of rear seats. The bulkhead section may be locked in a substantially upright vertical or angled position when the child seat is in use. In this position, the bulkhead section may be used as a footrest for a child occupying the seat. Also, the bulkhead section may act as a barrier and prevent objects located in the luggage compartment from coming into contact with the child, both during normal travel and during a collision event. If the luggage compartment is free from loose objects, it may also be possible to fold the bulkhead back down, so that it is flush with the floor section.

The collapsed child seat may be attached to a lower surface of the foldable bulkhead section when not in use. In this way the child seat is lifted out of its stored position and is immediately accessible for removal and attachment when the bulkhead section is folded up.

In operation, the person attaching the child seat will first determine if the size of the available child seat and/or the length of the child in question will require the backrest section or the backrest section and the seat section to be folded. The person would then proceed by folding forward the backrest and/or the seat section for a desired section of a rear row of seats. Subsequently, the rearwards facing child seat is placed onto the substantially horizontal, rear surface of the folded backrest section and in contact with a rear section of a seat located in front of the folded backrest section. The child seat is located by placing a releasable locking means underneath the child seat in contact with a corresponding locking means provided in rear surface of the folded backrest section and locking it in place.

After use, the child seat may be left in position with the backrest folded forward. If the seat taken up by the child seat is required for other use, a fixed type seat may be released and removed from the vehicle. A collapsible type child seat may be released, collapsed and stored in the vehicle, or left in position and collapsed to allow the folded backrest section to be returned to its upright position. The selected option may depend on the type of child seat or the frequency of use of the child seat.

The child seat according to the invention prevents this problems by allowing the child seat to be placed sufficiently forward of the rear seat back to give sufficient legroom. The invention disclosure describes a child seating system that can accommodate children from infancy to the age of five and beyond in a rearward facing position. The system can also be used in a vehicle with only a single row of seats such as a sports car or a light truck, where available space in the rear seat is often severely restricted.. The ease of mounting and stowing the child in the seat is also improved, especially in a two door vehicle.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a child seat mounted in a passenger seat, according to a first seat folding arrangement of the invention;
- Figure 2: shows a child seat mounted in a passenger seat, according to a second seat folding arrangement of the invention;
- Figure 3: shows a child seat mounted in a passenger seat, according to further features of the invention.

### EMBODIMENTS OF THE INVENTION

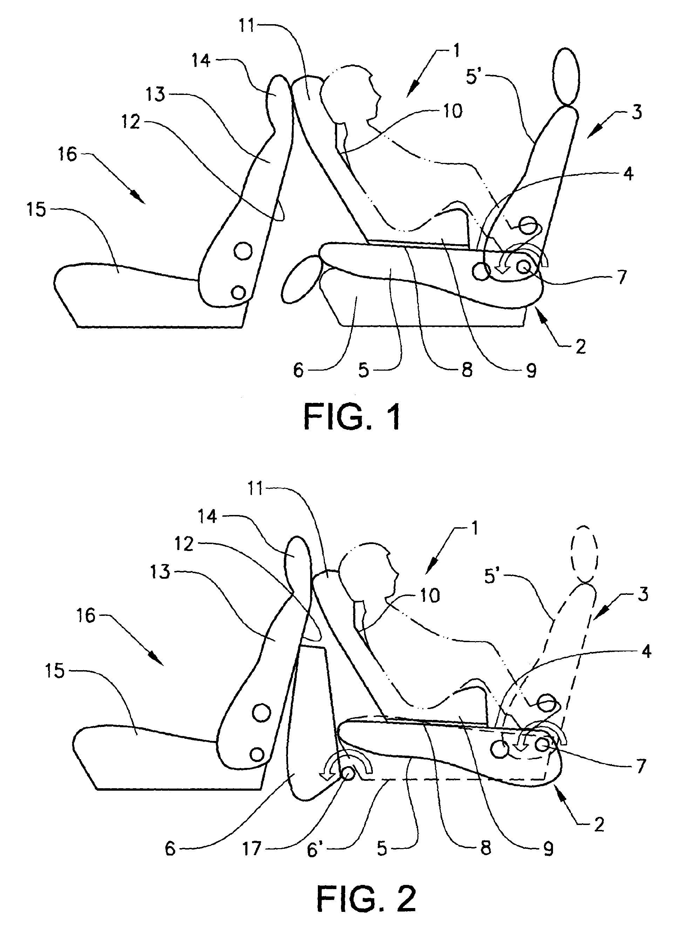

Figure 1 shows a child seat 1 mounted in a passenger seat 2 located in a rear row of seats 3, according to a first seat folding arrangement of the invention. The child seat 1 is attached to a rear surface, or a first support surface 4 of a backrest section 5 folded forwards and down over a seat section 6 about a pivot joint 7, where the upright position of the backrest is indicated by dashed lines 5'. In this position, the child seat 1 is locked into position onto the backrest section 5 by a locking means in the form of an ISOFIX ® fixture (not shown) located in the first support surface 4 of the backrest section 5 and in a lower surface 8 of the seat part 9 of the child seat 1. A backrest part 10 of the child seat 1 is provided with a head rest section 11, which is supported against a rear surface, or second support surface 12 on a backrest 13 or a headrest 14 on a seat 15 located in front of the child seat 1. The seat 15 supporting the head rest 11 of the child seat is located in a first row of seats for a standard vehicle with 5-6 seats or in a first or second row of seats for a larger vehicle with 6-7 seats or more.

The arrangement shown in Figure 1 is suitable for child seat sizes that can accommodate toddlers and children up to the age of about 5 years. The size limitation is dependent on the position at which the upper or headrest section 11 contacts the second support surface 12 of the forwardly located seat 15 in a front row of seats. If an upper surface of the headrest on the child seat 1 is higher than an upper surface of the headrest on the forwardly located seat 15, then the seat is folded into a lower position, as illustrated in Figure 2, wherein both the backrest section 5 and the seat section 6 have been folded.

Figure 2 shows the child seat 1 of Figure 1 mounted in a passenger seat 2 in which the seat section 6 has been folded forwards and upwards about a front pivot joint 17, from its original position 6' (indicated with dashed lines) to be located in a footwell (not shown) between the rear and front rows of seats 3, 16. Subsequently, the backrest section 5 is folded forwards and down about the pivot joint 7, into the space vacated by the seat section 6. As described in connection with Figure 1, the child seat 1 is then locked into position onto the backrest section 5 by a locking means, such as an ISOFIX ® fixture (not shown), located in the first support surface 4 of the backrest section 5 and in the underside 8 of the seat part 9 of the child seat. The backrest part 10 of the child seat 1 has a head rest section 11 that is supported against the rear surface, or second support surface 12 on the backrest 13 or the headrest 14 on the seat 15 located in front of the child seat 1.

The seat folding arrangement shown in Figure 2 uses the same size of child seat as shown in Figure 1. In this way it can clearly be seen that the seat in Figure 2 is located in a lower position relative to the front seat 15 and the vehicle. When folded over the seat section 6 the rear surface of the backrest 5 may be located horizontally, as shown in Figure 1. If the seat section 6 is folded forwards, as shown in Figure 2, the backrest 5 can be allowed to fold and move further down while maintaining a substantially horizontal rear surface for the child seat. The latter movement can be achieved by a suitable pivot and/or linkage arrangement for the backrest. Alternatively, the rear surface of the backrest may be angled forwards and upwards with the seat section in place, and be allowed to fold said rear surface to a substantially horizontal position with the seat section is folded forwards. Hence, the seating arrangement can accommodate both child seats for children from infancy to the age of five in a rearward facing position with the backrest folded, as well as child seats for children aged five and up with the seat section and the backrest folded.

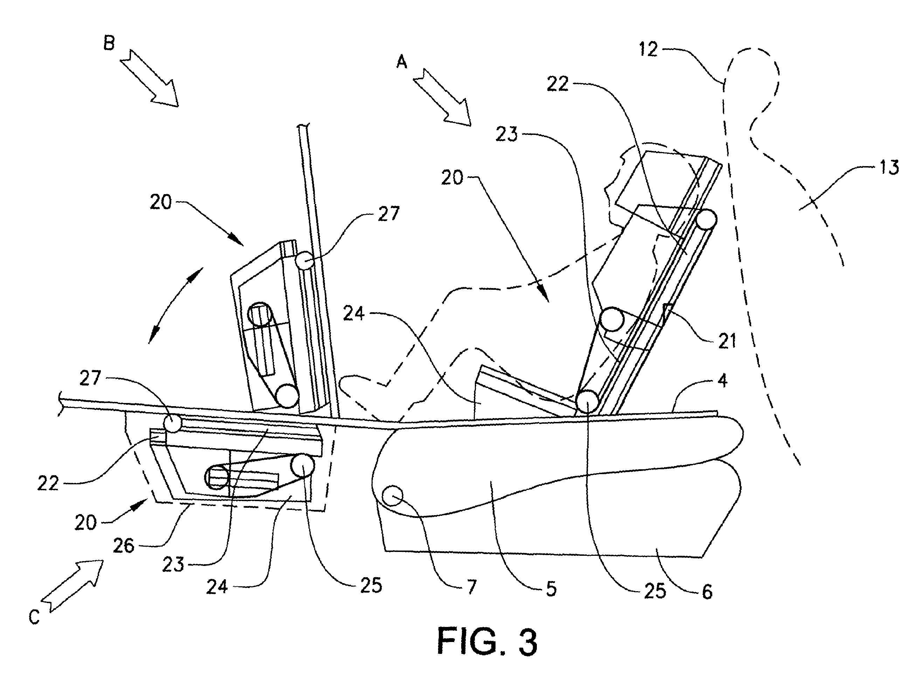

Figure 3 shows a further feature of the seating arrangement, where a collapsible rear facing child seat 20 is attached to a first support surface 4 of a backrest section 5 that has been folded forwards over a seat section 6 about a pivot joint 7, as described in connection with Figure 1 above. The child seat 20 is shown in a first position, indicated by the arrow A, placed on the backrest section 5 and supported by the support surface 12 on the seat 15 (indicated with dashed lines) located in front of the child seat 20.

While still attached to the backrest section 5, or when removed from the first position A, a backrest 21 is collapsed by releasing a first locking means (not shown) telescoping an upper part 22 into a lower part 23. Subsequently, a second locking means (not shown) is released to allow the collapsed backrest 21 to be folded over a seat part 24. The backrest 21 is folded around a pivot joint 25 located where the backrest 21 is joined to the seat part 24. Once the child seat has been collapsed to this stage, it can be removed from the backrest section 5 by releasing the ISOFIX ® fixture holding it in place. The collapsed child seat 20 is then stored in a compartment 26 located under a foldable bulkhead section 27 in a floor section in a luggage compartment located to the rear of the backrest section 5. The child seat 20 is attached to a lower surface of the bulkhead 27 by means of the same ISOFIX ® locking means used for attaching it to the backrest section 5. In this way the child seat is lifted out of its stored position and is immediately accessible for removal and attachment when the bulkhead section 27 is folded up.

The bulkhead section 27 can be locked in an angled position, indicated by arrow B, or in a closed position, indicated by arrow C, when the child seat 20 is in use. In its closed position C, the bulkhead is flush with the luggage compartment floor section behind the backrest section 5. In its upright position B, the bulkhead section can be used as a footrest for a child occupying the child seat 20. Also, the bulkhead section 27 acts as a barrier and prevents objects located in the luggage compartment from coming into contact with the child, both during normal travel and during a collision event. If the luggage compartment is free from loose objects.

Alternatively, the child seat 20 may be collapsed while still attached to the folded down backrest section 5. The backrest section 5 can then be raised to its upright position, while the child seat 20 remains attached and is stored in the luggage compartment behind the backrest section 5.

The invention is not limited to the above embodiments, but may be varied freely within the scope of the claims.

## Claims

1. A vehicle child seat arrangement in a vehicle comprising a row of rear seats (3) and a row of front seats (15), the arrangement comprising a rear seat (3) having a backrest section (5) and a seat section (6), wherein at least a part of the backrest section (5) can be folded forwards from an upright position to a substantially flat position, in which position the folded backrest section (5) has a rear surface (4) having a substantially horizontal surface forming a first support surface (4) for a seat section (9) of a rearward facing child seat (1), and wherein the rear surface (4) of the folded backrest section (5) is provided with locking means arranged to cooperate with corresponding locking means in the seat section of the child seat in order to locate and hold the child seat (1) in position, **characterized in**
- **that** a rear section (13) of a front seat (15) located in front of the folded backrest section (5) forming a second support surface (12) for a backrest section (10) of the rearward facing child seat (1),
- **that** the backrest section (5) can be folded forwards into two alternative positions dependent on the size of the child seat (1),
- **that** the backrest section (5) can be folded forwards from an upright position to a first substantially flat position, when the seat section (6) has been folded forwards around a front pivot point (17) into a foot well in front of the rear seat and the backrest section (5) has been folded forwards and moved further into the space vacated by the seat section (6), and
- **that** the backrest section (5) can be folded forwards from an upright position to a second substantially flat position, when the backrest section (5) has been folded forwards into contact with the seat section (6).

2. A vehicle child seat arrangement according to claim 1,
**characterized in that** the child seat (1) is foldable into a collapsed state for storage on the backrest section (5) when not in use.

3. A vehicle child seat arrangement according to claim 2,
**characterized in that** the child seat (1) comprises a backrest (21) having an upper section (22) that is arranged telescoping into a lower section (23), and that the telescoped backrest (21) is arranged to be folded over a seat section (24) for storage.

4. A vehicle child seat arrangement according to claim 2,
**characterized in that** the child seat (1) is arranged to remain releasably attached to the rear surface (4) of the backrest section (5) when the backrest section (5) is in an upright position.

5. A vehicle child seat arrangement according to claim 1,
**characterized in that**, when an attached child seat (1) intended for accommodating a child up to five years of age is used, the backrest section (5) is arranged to be folded from its upright position to its folded position.

6. A vehicle child seat arrangement according to claim 1,
**characterized in that**, when an attached child seat (1) intended for accommodating a child over five years of age is used, the seat section (6) of the rear seat (3) is arranged to be folded forwards and the backrest section (5) is arranged to be folded from its upright position to its folded position.

## Patentansprüche

1. Fahrzeug-Kindersitzanordnung in einem Fahrzeug, umfassend eine Reihe von hinteren Sitzen (3) und eine Reihe von vorderen Sitzen (15), welche Anordnung einen hinteren Sitz (3) umfasst, aufweisend einen Rückenlehnenabschnitt (5) und einen Sitzabschnitt (6), wobei zumindest ein Teil des Rückenlehnenabschnitts (5) von einer aufrechten Position zu einer im Wesentlichen flachen Position nach vorn klappbar ist, in welcher Position der geklappte Rückenlehnenabschnitt (5) eine hintere Fläche (4) aufweist, aufweisend eine im Wesentlichen horizontale Fläche, welche eine erste Unterstützungsfläche (4) für einen Sitzabschnitt (9) eines rückwärtsgerichteten Kindersitzes (1) bildet, und wobei die hintere Fläche (4) des geklappten Rückenlehnenabschnitts (5) mit Verriegelungsmitteln versehen ist, welche zum Zusammenwirken mit entsprechenden Verriegelungsmitteln im Sitzabschnitt des Kindersitzes eingerichtet sind, um den Kindersitz (1) in Position anzubringen und festzuhalten, **dadurch gekennzeichnet,**
- **dass** ein hinterer Abschnitt (13) eines vor dem geklappten Rückenlehnenabschnitt (5) angebrachten vorderen Sitzes (15) eine zweite Unterstützungsfläche (12) für einen Rückenlehnenabschnitt (10) des rückwärtsgerichteten Kindersitzes (1) bildet,
- **dass** der Rückenlehnenabschnitt (5) in Abhängigkeit von der Größe des Kindersitzes (1) in zwei alternative Positionen nach vorn klappbar ist,
- **dass** der Rückenlehnenabschnitt (5) von einer aufrechten Position zu einer ersten im Wesentlichen flachen Position nach vorn klappbar ist, wenn der Sitzabschnitt (6) um einen vorderen Schwenkpunkt (17) nach vorn in einen Fußraum vor dem hinteren Sitz geklappt worden ist, und der Rückenlehnensitz (5) nach vorn geklappt und zusätzlich in den vom Sitzabschnitt (6) freigegebenen Raum bewegt worden ist, und
- **dass** der Rückenlehnenabschnitt (5) von einer aufrechten Position zu einer zweiten im Wesentlichen flachen Position nach vorn klappbar ist, wenn der Rückenlehnenabschnitt (5) zum Kontakt mit dem Sitzabschnitt (6) nach vorn geklappt worden ist.

2. Fahrzeug-Kindersitzanordnung nach Anspruch 1,
**dadurch gekennzeichnet, dass** der Kindersitz (1) bei Nichtgebrauch in einen zusammengeklappten Zustand zur Aufbewahrung auf dem Rückenlehnenabschnitt (5) klappbar ist.

3. Fahrzeug-Kindersitzanordnung nach Anspruch 2,
**dadurch gekennzeichnet, dass** der Kindersitz (1) eine Rückenlehne (21) umfasst, die einen oberen Abschnitt (22) aufweist, welcher zum Teleskopieren in einen unteren Abschnitt (23) eingerichtet ist, und dass die teleskopierte Rückenlehne (21) über einem Sitzabschnitt (24) für Aufbewahrung zum Zusammenklappen eingerichtet ist.

4. Fahrzeug-Kindersitzanordnung nach Anspruch 2,
**dadurch gekennzeichnet, dass** der Kindersitz (1) dazu eingerichtet ist, an der hinteren Fläche (4) des Rückenlehnenabschnitts (5) lösbar befestigt zu verbleiben, wenn sich der Rückenlehnenabschnitt (5) in einer aufrechten Position befindet.

5. Fahrzeug-Kindersitzanordnung nach Anspruch 1,
**dadurch gekennzeichnet, dass** der Rückenlehnenabschnitt (5), wenn ein für die Unterbringung eines Kindes bis zu fünf Jahren vorgesehener befestigter Kindersitz (1) verwendet wird, so eingerichtet ist, dass er von seiner aufrechten Position zu seiner geklappten Position geklappt wird.

6. Fahrzeug-Kindersitzanordnung nach Anspruch 1,
**dadurch gekennzeichnet, dass** der Sitzabschnitt (6) des hinteren Sitzes (3), wenn ein für die Unterbringung eines Kindes von mehr als fünf Jahren vorgesehener befestigter Kindersitz (1) verwendet wird, so eingerichtet ist, dass er nach vorn geklappt wird, und der Rückenlehnenabschnitt (5) so eingerichtet ist, dass er von seiner aufrechten Position zu seiner geklappten Position geklappt wird.

## Revendications

1. Agencement de siège enfant de véhicule dans un véhicule comportant une rangée de sièges arrière (3) et une rangée de sièges avant (15), l'agencement comprenant une siège arrière (3) ayant une section de dossier (5) et une section de siège (6), au moins une portion de la section de dossier (5) pouvant être pliée vers l'avant depuis une position verticale à une position sensiblement plane, position dans laquelle la section de dossier (5) pliée présente une surface arrière (4) ayant une surface essentiellement horizontale formant une première surface d'appui (4) pour une section de siège (9) d'un siège enfant (1) dos à la route, et la surface arrière (4) de la section de dossier (5) pliée étant pourvue de moyens de verrouillage agencés pour coopérer avec des moyens de verrouillage correspondants dans la section du siège du siège enfant afin de localiser et de maintenir le siège enfant (1) en position, **caractérisé en ce**
- **que** la section arrière (13) d'un siège avant (15) située en face de la section de dossier (5) pliée formant une deuxième surface d'appui (12) pour une section de dossier (10) du siège enfant (1) dos à la route,
- **que** la section de dossier (5) peut être pliée vers l'avant dans deux positions alternatives en fonction des dimensions du siège enfant (1),
- **que** la section de dossier (5) peut être pliée vers l'avant depuis une position verticale à une position essentiellement plane, lorsque la section de siège (6) a été pliée vers l'avant autour d'un point de pivotement avant (17) dans un espace pour pieds devant le siège arrière et la section de dossier (5) a été pliée vers l'avant et déplacée davantage dans l'espace libéré par la section de siège (6), et
- **que** la section de dossier (5) peut être pliée vers l'avant depuis une position verticale à une deuxième position essentiellement plane, lorsque la section de dossier (5) a été pliée vers l'avant pour entrer en contact avec la section de siège (6).

2. Agencement de siège enfant de véhicule selon la revendication 1, **caractérisé en ce que** le siège enfant (1) est pliable dans un état effondré pour le stockage sur la section de dossier (5) lorsqu'il n'est pas utilisé.

3. Agencement de siège enfant de véhicule selon la revendication 2, **caractérisé en ce que** le siège enfant (1) comprend un dossier (21) présentant une section supérieure (22) qui est arrangée de manière télescopique dans une section inférieure (23), et que le dossier télescopique (21) est disposé pour être replié sur une section de siège (24) pour le stockage.

4. Agencement de siège enfant de véhicule selon la revendication 2, **caractérisé en ce que** le siège enfant (1) est arrangé pour rester attaché de manière libérable à la surface arrière (4) de la section de dossier (5) lorsque la section de dossier (5) est dans une position verticale.

5. Agencement de siège enfant de véhicule selon la revendication 1, **caractérisé en ce que** si l'on utilise un siège enfant (1) attaché et destiné à accueillir un enfant jusqu'à cinq ans, la section de dossier (5) est arrangée pour être pliée depuis sa position verticale à sa position pliée.

6. Agencement de siège enfant de véhicule selon la revendication 1, **caractérisé en ce que** si l'on utilise un siège enfant (1) attaché et destiné à accueillir un enfant de plus de cinq ans, la section de siège (6) du siège arrière (3) est arrangée pour être pliée vers l'avant, et la section de dossier (5) est arrangée pour être pliée depuis sa position verticale à sa position pliée.
